# EUROPEAN PATENT SPECIFICATION

(11) **EP 1 255 405 B1**
(45) Date of publication and mention of the grant of the patent: **03.11.2004**
(21) Application number: 02291082.2
(22) Date of filing: 30.04.2002
(51) Int. Cl.: H04N 5/74

(54) **Mechanical system for adjusting image centering and rotation in projection television apparatus**
Mechanische Vorrichtung zur Einstellung der Bildlage und -drehung in einem Projektionsfernsehgerät
Système mécanique pour un ajustement de rotation et centrage d'image dans un appareil de télévision par projection

(30) Priority: 02.05.2001 US 288217 P
(43) Date of publication of application: 06.11.2002
(73) Proprietor: Thomson Licensing S.A., 92100 Boulogne-Billancourt (FR)
(72) Inventor: Duggan, Joseph Scott, Indianapolis, IN 46236 (US); Ritter, Darin Bradley, Indianapolis, In 46240 (US)
(74) Representative: Ruellan-Lemonnier, Brigitte

(56) References cited:
- EP-A- 0 735 410
- EP-A- 0 939 548
- EP-A- 1 137 275

## Description

### Description of Related Art

Many systems use electronic adjustment of image centering and rotation. This invention relates to projection television apparatus, and is particularly advantageous with liquid crystal display (LCD) projection systems. With LCD projectors, electronic adjustment of centering and rotation adversely impacts picture performance. For electronic centering, there must be extra pixels outside of the image area to accommodate image shift. Therefore, some of the pixels are unused and resolution is reduced. For electronic rotation of the image, there is a similar result of wasted pixels, as well as a digital "stair-stepping" effect that occurs when a horizontal or vertical line is rotated and mapped to a rectangular pixel array.

### Problem Solved

The projectors used in projection television apparatus must be properly adjusted in order to provide maximum picture accuracy. This invention allows a projector to be finely positioned such that the projected image is corrected to provide aiming and rotational accuracy. A solution has already been described in EP-A-1137275 filed in the name of THOMSON Licensing S.A.

### Summary of the Invention.

This invention provides an improved adjuster for positioning an element in a projection television apparatus. The adjuster comprises a bracket that mounts the element. First, second and third eccentric cams, positioned in substantially the same plane, mate with first, second and third slots in the bracket. The first cam has the ability to move the bracket in an X direction. The second cam has the ability to move the bracket in a Y direction perpendicular to said X direction, and the third cam has the ability to rotate the bracket in a plane defined by the X and Y directions.

At least one of the cams provides both an adjustment function and a hold-down function.

An advantageous feature of the invention is that means prevent one of the cams from moving when another cam is being adjusted.

Another advantageous feature of the invention is that at least one cam has a flange and matches the thickness of the slotted bracket.

Another advantageous feature of the invention is that a mating part, rigidly coupled to a housing for said television apparatus, is rigidly coupled to an overhanging arm. The bracket is sandwiched between the overhanging arm and the mating part.

Another advantageous feature of the invention is that the overhanging arm has an interference hump bearing against the bracket.

Another advantageous feature of the invention is that a mating part, rigidly coupled to a housing for the television apparatus, is urged toward a cam by a compression spring.

Another advantageous feature of the invention is that the compression spring is a wavy washer.

### Brief Description of the Drawing

In the drawing:
Figures 1a and 1b show the cam arrangement of the invention in two different positions.
Figure 2 is a cross section view of the inventive cam mechanism.
Figures 3a, 3b, 3c and 3d are views of a wavy washer used with the inventive cam mechanism.

### Detailed Description

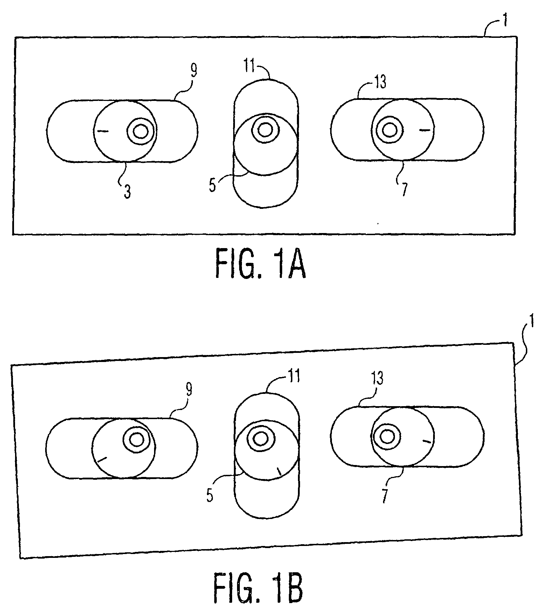

Referring to Figures 1a and 1b, the invention provides a slotted bracket 1 that mounts the projector, and an eccentric cam arrangement that allows the bracket to be positioned accurately over a limited range. By using three cams 3, 5, and 7, in three slots 9, 11 and 13, X and Y motion, as well as rotation, can be achieved.

Figure 1a shows the cams in their nominal positions. Rotation of cam 5 produces horizontal motion of bracket 1 in an X direction. Rotation of cams 3 and 7 in the same direction produces vertical motion of bracket 1 in a Y direction. Differential rotation of cams 3 and 7 causes bracket 1 to rotate, as shown in Figure 1b. Note that in Figure 1b, cam 5 has been rotated by a small amount, which also translates bracket 1 in a horizontal direction

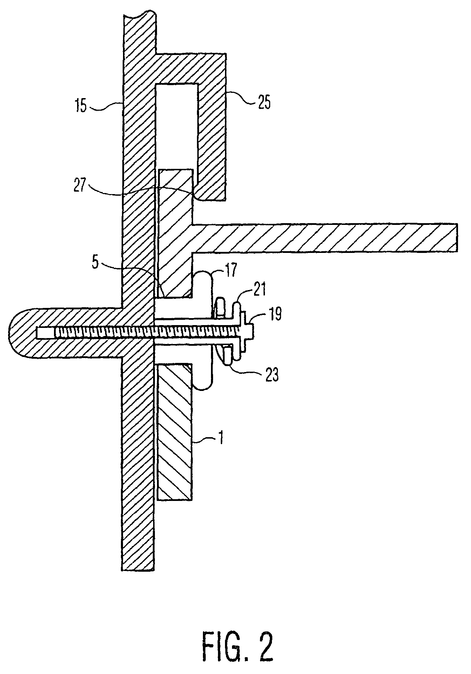

A feature of the invention comprises a cam serving double duty as both a hold-down function and an adjustment function. Referring to Figure 2, mating part 15, which is rigidly coupled to a housing for the television apparatus, is held to bracket 1 by the cam arrangement. Only one of the three cams is shown in Figure 2. However, the structure of the other cams is similar. Cam 5 has a flange 17 which holds bracket 1 to mating part 15. Screw 19 threads into mating part 15, through shoulder bushing 21, wavy washer spring 23 and cam 5. Because the thickness of cam 5 is matched to the thickness of bracket 1, flange 17 holds bracket 1 in frictional engagement with mating part 15, the amount of friction being determined by the pressure exerted by wavy washer spring 23.

Mating part 15 has an overhanging arm 25 which assists in keeping bracket 11 in contact with mating part 15. Overhanging arm 25 has an interference hump 27 which bears against bracket 1 without unduly increasing the friction therebetween.

Another feature of the invention is to prevent one cam from moving when another cam is being adjusted. Flange 17 causes bracket 1 to be frictionally engaged with mating part 15. When one cam is adjusted, the other cams maintain their positions by virtue of their frictional engagement with mating part 15. As a result, each cam can be adjusted with minimal motion of the other cams.

Preventing one cam from moving when another one is being adjusted is accomplished by using a screw 19, shoulder bushing 21 and a compression spring 23 to generate a clamp load between the cam and the mating part 15, such that a frictional force counteracts rotation. The amount of friction is selected such that a cam does not inadvertently turn too easily, but that it is not too difficult for a person to rotate a cam by hand with a simple tool.

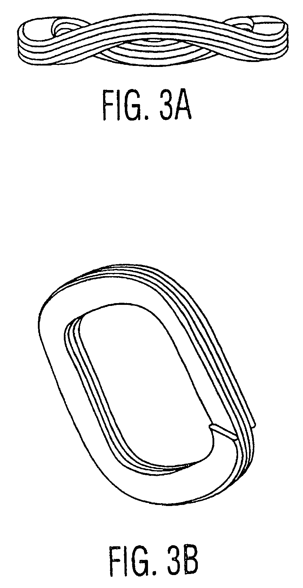

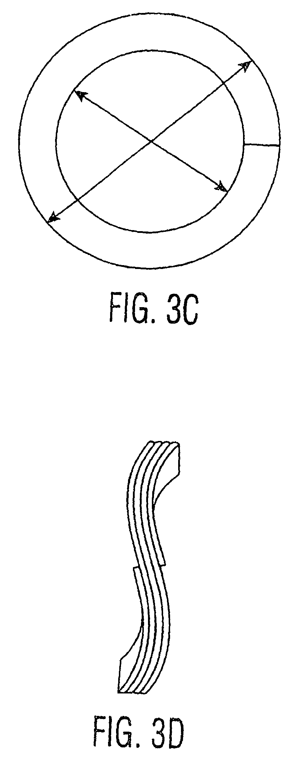

A preferred embodiment uses an edge wound wavy spring washer 23, as shown in Figures 3a, 3b, 3c and 3d, to generate the high compression load needed between the cam and the mating part. Such an arrangement is able to fit in a compact space.

A benefit of using a wavy washer as the spring 23, instead of a helical wire spring, is the inherent "rounded" contact surfaces between the spring and the mating parts, shoulder bushing 21 and cam 5. By having these rounded contact surfaces, the amount of digging and galling caused by the spring to the mating parts is minimized. This allows the spring to directly contact a plastic cam without the added cost or bulk of a metal washer. The wavy washer spring also does not have the problem of "winding" and "unwinding" as the cams are turned. Such winding and unwinding tends to undesirably add to the variability of the rotary force needed to turn the cam.

## Claims

1. An adjuster for positioning an element in a projection television apparatus, said adjuster comprising:
a bracket (1) that mounts said element; first (3), second (5) and third (7) eccentric cams positioned in substantially the same plane:
first (9), second (11) and third (13) slots in said bracket (i) each mated with a respective one of said cams;
rotation of said second cam (3) having the ability to move said bracket in an X direction;
rotation of said first (3) and third (7) cams having the ability to move said bracket in a Y direction perpendicular to said X direction; and
rotation of said first (3) and third cams also having the ability to rotate said bracket in a plane defined by said X and Y directions,
wherein one of said cams comprises means (17) to provide both an adjustment function and a hold-down function.

2. An adjuster as in Claim 1, comprising:
means for preventing one (5) of said cams from moving when another cam is being adjusted.

3. An adjuster as in Claim 1 in which one cam (5) has a flange (17), and in which the thickness of said cam matches the thickness of said slotted bracket (1).

4. An adjuster as in Claim 1, comprising:
a mating part (15) rigidly coupled to a housing for said television apparatus;
an overhanging arm (25) rigidly coupled to said mating part (15);
said bracket (1) being sandwiched between said overhanging arm (25) and said mating part (15).

5. An adjuster as in claim 4, in which said overhanging arm (25) has an interference hump (27) bearing against said bracket.

6. An adjuster as in Claim 1, comprising:
a mating part (15) rigidly coupled to a housing for said television apparatus; and
a compression spring (23) positioned to urge a cam (5) toward said mating part (15).

7. An adjuster as in Claim 1, in which said compression spring is a wavy washer.

## Patentansprüche

1. Einsteller zur Positionierung eines Bauteils in einem Projektionsfemsehgerät mit:
einer das Bauteil tragenden Klammer (1), einem ersten (3), zweiten (5) und dritten (7) exzentrischen Nocken, die im wesentlichen in derselben Ebene liegen,
einem ersten (9), einem zweiten (11) und einem dritten (13) Langloch in der Klammer (1), von denen jedes mit einem der Nocken zusammen arbeitet, wobei
die Drehung des zweiten Nockens (3) die Klammer in einer X-Richtung bewegen kann, und
die Drehung des ersten (3) und des dritten (7) Nockens die Klammer in einer Y-Richtung senkrecht zu der X-Richtung bewegen kann, und
die Drehung des ersten (3) und dritten Nockens außerdem die Klammer (1) in einer durch die X- und Y-Richtung definierten Ebene drehen kann, und
einer der Nocken Mittel (17) enthält, um sowohl eine Einstellfunktion als auch eine Niederhaltfunktion zu bilden.

2. Einsteller nach Anspruch 1 mit:
Mitteln, die verhindern, dass einer der Nocken (5) bewegt wird, wenn ein anderer Nocken eingestellt wird.

3. Einsteller nach Anspruch 1, in dem ein Nocken (5) einen Flansch (17) aufweist und die Dicke des Nockens an die Dicke der mit Langlöchem versehenen Klammer (1) angepasst ist.

4. Einsteller nach Anspruch 1 mit:
einem Anpassteil (15), das fest mit einem Gehäuse für das Fernsehgerät verbunden ist,
einem vorspringendem Arm (25), der fest mit dem Anpassteil (15) verbunden ist,
wobei die Klammer (1) zwischen dem vorspringenden Arm (25) und dem Anpassteil (15) eingefasst ist.

5. Einsteller nach Anspruch 4, in dem der vorspringende Arm (25) einen Haltebuckel (27) aufweist, der an der Klammer (1) anliegt.

6. Einsteller nach Anspruch 1 mit:
einem Anpassteil (15), das fest mit einem Gehäuse für das Fernsehgerät verbunden ist, und
einer derart positionierten Druckfeder (23), dass sie einen Nocken (5) gegen das Anpassteil (15) drückt.

7. Einsteller nach Anspruch 1, in dem die Druckfeder durch eine gewellte Unterlegscheibe gebildet ist.

## Revendications

1. Un moyen d'ajustement pour positionner un élément dans un appareil de télévision par projection, le moyen d'ajustement comprenant
- un support de montage desdits éléments, des première (3), seconde (5) et troisième (7) cames désaxées positionnées sensiblement dans le même plan.
- des première (9), seconde (11), et troisième (13) fentes dans ledit support (1) chacune s'adaptant avec une desdites cames,
- une rotation de la seconde came (3) entraînant le déplacement du support dans une direction X
- une rotation desdites première (3) et troisième (7) cames entraînant le déplacement du support dans une direction Y perpendiculaire à la dite direction X, et
- une rotation desdites première (3) et troisième cames entraînant aussi une rotation dudit support dans un plan défini par les directions X et Y
dans lequel une des cames comporte un moyen (17) pour fournir à la fois une fonction d'ajustement et une fonction de maintien.

2. Un moyen d'ajustement comme dans la revendication 1, comprenant un moyen pour empêcher qu'une (5) des cames né se déplace quand une autre came est ajustée.

3. Un moyen d'ajustement comme dans la revendication 1 dans lequel une came (5) comporte un flasque (17) et dans lequel l'épaisseur de la dite came correspond à l'épaisseur du support (1) rainuré.

4. Un moyen d'ajustement comme dans la revendication 1, comprenant :
- une partie d'adaptation (15) couplée rigidement au bâti de l'appareil de télévision,
- un bras en surplomb (25) couplé rigidement à la partie d'adaptation (15)
- le dit support (1) étant pris en sandwich entre ledit bras en surplomb (25) et ladite partie d'adaptation (15)

5. Un moyen d'ajustement comme dans la revendication 4 dans lequel le bras en surplomb (25) comporte un embossement (27) portant contre ledit support.

6. Un moyen d'ajustement comme dans la revendication 1 comprenant
une partie d'adaptation (15)couplée rigidement au bâti de l'appareil de télévision, et
un ressort de compression (23) positionné pour pousser la came (5) vers la partie d'adaptation (15).

7. Un moyen d'ajustement comme dans la revendication 1 dans lequel le ressort de compression est une rondelle ondulée.
